# EUROPÄISCHE PATENTSCHRIFT

(11) **EP 1 577 152 B1**
(45) Veröffentlichungstag und Bekanntmachung des Hinweises auf die Patenterteilung: **09.06.2010**
(21) Anmeldenummer: 05005268.7
(22) Anmeldetag: 10.03.2005
(51) Int. Cl.: B60N 2/30, B60N 2/46, B64D 11/06

(54) **Klappsitz abwärts**
Retractable seat
Siège escamotable

(30) Priorität: 15.03.2004 DE 102004012480; 03.08.2004 US 598253 P
(43) Veröffentlichungstag der Anmeldung: 21.09.2005
(73) Patentinhaber: Airbus Operations GmbH, 21129 Hamburg (DE)
(72) Erfinder: Schumacher, Markus, 21614 Buxtehude (DE); Muin, Andrew, 21688 Harsefeld (DE)
(74) Vertreter: Maiwald Patentanwalts GmbH

(56) Entgegenhaltungen:
- FR-A- 651 808
- FR-A- 673 699

## Beschreibung

Die vorliegende Erfindung betrifft einen Klappsitz, insbesondere für eine Passagierkabine eines Flugzeuges. Insbesondere betrifft die vorliegende Erfindung einen Klappsitz für ein Flugzeug, eine Sitzgruppe für ein Fahrzeug und ein Flugzeug mit einem entsprechenden Klappsitz.

Herkömmliche Passagiersitze für Flugzeuge haben ein Tragegestell mit einer fest darauf angeordneten Sitzfläche und einer im Bereich der Hinterkante der Sitzfläche angeordneten Rückenlehne. In Flugzeugen bilden die Passagiersitze vorzugsweise Sitzreihen, wobei zwei oder mehrere nebeneinander angeordnete Passagiersitze oder Sitze zu einer Sitzgruppe zusammengefasst sein können, die von einem gemeinsamen Tragegestell getragen wird. Auf jeder Seite eines Sitzes ist üblicherweise eine Armlehne angeordnet. Die Sitzgruppen sind als starre Einheiten für die Montage in den Passagierkabinen der Flugzeuge vorgesehen. Entsprechend der Anforderung der Airlines kann es dabei zu unterschiedlichen Konfigurationen kommen, wobei vorrangig eine größtmögliche Sitzkapazität angestrebt wird. Ein Nachteil einer Passagierkabine mit einer hohen Sitzanzahl besteht darin, dass aufgrund der schmalen Kabinenlängsgänge - auch Verkehrsfläche genannt - zwischen den Sitzreihen das Ein- und Aussteigen der Passagiere einen hohen Zeitaufwand erfordert. Es können vor allem dann Stockungen entstehen, wenn die Passagiere zum Verstauen des Handgepäcks, beispielsweise in Fächern über den Sitzen, im Gang stehen bleiben, wodurch dieser blockiert wird. Üblicherweise sind die Kabinengänge zu schmal, um ein Aneinandervorbeigehen zweier Fluggäste zu ermöglichen. Auch bei Reinigungsarbeiten ist insbesondere ein Raum zwischen den Sitzreihen schwer zugänglich.

Die Bodenzeit zwischen aufeinanderfolgenden Flügen eines Flugzeugs - auch "Turn around"-Zeit genannt - ist für die Wirtschaftlichkeit eines Verkehrsflugzeuges von maßgeblicher Bedeutung. Es ist somit notwendig, dass trotz einer hohen Sitzbelegung in der Passagierkabine die Verkehrsfläche so ausgestaltet ist, dass ein schnelles Ein- und Aussteigen der Passagiere ermöglicht wird und der Zeitaufwand für notwendige Bodenarbeiten minimiert wird.

Die FR 651 808 A betrifft einen Klappsitz, bei welchem die Armlehne d über ein axial gelagertes Verbindungselement e mit der Sitzfläche c gekoppelt ist. Schwenkt man die Sitzfläche c nach oben, klappen die Armlehnen nach unten. Die FR 651 808 A offenbart eine Klappsitz nach dem Oberbegriff des Anspruch 1.

Die FR 2 790 927 A offenbart einen Stuhl mit einem neigungsverstellbaren Sitz, der eine Gasfeder zur Unterstützung des Hochklappens der Sitzfläche aufweist.

Es ist eine Aufgabe der vorliegenden Erfindung, eine Verkehrsfläche eines Flugzeugs, insbesondere bei einem Aufenthalt auf dem Boden, zu vergrößern.

Gemäß einem Ausführungsbeispiel der vorliegenden Erfindung kann die obige Aufgabe mittels eines Klappsitzes für ein Flugzeug gelöst werden, der die Merkmale des Anspruchs 1 aufweist.

In vorteilhafter Art und Weise ermöglicht dies eine Vergrößerung der Verkehrsfläche, d. h. der Flächen in der Passagierkabine eines Flugzeuges, auf der sich die Personen bewegen können, insbesondere beim Be- und Entsteigen des Flugzeugs. So kann beispielsweise ein Passagier zum Verstauen des Gepäcks in Fächern über den Sitzen oder unter den Sitzen zwischen zwei aufeinanderfolgende Sitzreihen treten und somit den Gang freimachen, so dass weitere Passagiere zu ihren Plätzen gehen können. Ermöglicht wird dies dadurch, dass sowohl die Sitzfläche weggeschwenkt werden kann als auch die Armlehne des Sitzes weggeschwenkt werden kann, so dass zwischen zwei nacheinander angeordneten Sitzen noch genügend Platz verbleibt, dass eine Person dort stehen kann.

Ein Anschwenken der Sitzfläche an die Rückenlehne bewirkt ein Verschwenken der Armlehne nach unten. Vorteilhaft ermöglicht dieser Klappsitz beispielsweise eine einfache Handhabung, da durch Anschwenken oder Anklappen der Sitzfläche nach oben an die Rückenlehne des Sitzes automatisch die Armlehne nach unten verschwenkt wird, wodurch ein einfacher Zugang zu dem Raum zwischen aufeinanderfolgenden Sitzen ermöglicht wird.

Die Sitzfläche und die Armlehne sind kraftschlüssig gekoppelt. Auf diese Art und Weise kann beispielsweise eine Handhabung derart vereinfacht werden, dass lediglich ein einziger Handgriff erforderlich ist, um Sitzfläche und Armlehne zu verschwenken. Insbesondere kann dies bei Reinigungsarbeiten vorteilhaft sein.

Gemäß der vorliegenden Erfindung sind die Sitzfläche und die Armlehne mittels zumindest einem Koppelelement gekoppelt.

Gemäß einem weiteren vorteilhaften Ausführungsbeispiel der vorliegenden Erfindung ist der Klappsitz zur Anordnung an einen Gang in einem Flugzeug ausgestaltet. Beispielsweise kann der Klappsitz der Gangsitz einer Sitzgruppe mit zwei, drei oder mehreren Sitzen sein. In vorteilhafter Art und Weise wird dadurch die Verkehrsfläche des Ganges zwischen aufeinanderfolgenden Sitzreihen erweitert, in dem Personen beispielsweise zum Verstauen von Gepäckstücken zwischen Sitzreihen treten können.

Weitere vorteilhafte Ausführungsbeispiele des Klappsitzes gemäß der vorliegenden Erfindung sind in den Ansprüchen 3 und 4 angegeben.

Gemäß einem weiteren Ausführungsbeispiel der vorliegenden Erfindung wird eine Sitzgruppe für ein Fahrzeug angegeben, die die Merkmale des Anspruchs 5 aufweist. Beispielsweise kann das Fahrzeug ein Flugzeug sein. Insbesondere bei einem Flugzeug mit jeweils zwei Sitzen auf jeder Seite des Ganges ist insbesondere der Sitz der Sitzgruppe mit schwenkbarer Sitzfläche und schwenkbarer Armlehne versehen, der jeweils an den Gang angrenzt. In vorteilhafter Art und Weise kann damit die Verkehrsfläche des Flugzeuges ausgeweitet werden, wodurch ein Besteigen und Verlassen des Flugzeuges durch die Passagiere beschleunigt werden kann. Auch kann dies zu einer Verringerung einer Zeit beitragen, die zur Reinigung des Flugzeuges benötigt wird. Insgesamt kann in vorteilhafter Art und Weise eine "Turn around"-Zeit eines Flugzeuges verringert werden.

Ein weiteres vorteilhaftes Ausführungsbeispiel der Sitzgruppe gemäß der vorliegenden Erfindung ist in Anspruch 6 angegeben.

Gemäß einem weiteren vorteilhaften Ausführugsbeispiel der vorliegenden Erfindung ist ein Flugzeug angegeben, das einen Klappsitz gemäß der vorliegenden Erfindung oder eine Sitzgruppe gemäß der vorliegenden Erfindung aufweist. In vorteilhafter Art und Weise kann solch ein Flugzeug eine verringerte "Turn around"-Zeit aufweisen. Überdies kann beispielsweise ein Gang zwischen benachbarten Sitzreihen sehr schmal ausgestaltet werden, da zum Zusteigen der Passagiere und für ein Verlassen der Passagiere die jeweils gangseitigen Sitzflächen und Armlehnen weggeklappt werden können, wodurch die Verkehrsfläche des Flugzeugs insgesamt wieder vergrößert wird.

Im Folgenden werden vorteilhafte Ausführungsbeispiele der vorliegenden Erfindung mit Verweis auf die folgenden Figuren beschrieben.
Fig. 1 zeigt eine dreidimensionale Seitenansicht eines Ausführungsbeispiels eines Klappsitzes für ein Flugzeug.
Fig. 2 zeigt eine weitere dreidimensionale Seitenansicht eines Ausführungsbeispiels eines Klappsitzes für ein Flugzeug.
Fig. 3 zeigt eine weitere dreidimensionale Seitenansicht eines Ausführungsbeispiels eines Klappsitzes für ein Flugzeug gemäß der vorliegenden Erfindung.
Fig. 4 zeigt eine weitere dreidimensionale Ansicht eines Ausführungsbeispiels eines Klappsitzes für ein Flugzeug.
Fig. 5 zeigt eine weitere schematisierte dreidimensionale Seitenansicht eines Ausführungsbeispiels eines Klappsitzes für ein Flugzeug.
Fig. 6 zeigt eine weitere schematisierte dreidimensionale Seitenansicht eines Ausführungsbeispiels eines Klappsitzes für ein Flugzeug.
Fig. 7 zeigt eine weitere schematisierte dreidimensionale Seitenansicht eines Ausführungsbeispiels eines Klappsitzes für ein Flugzeug.
Fig. 8 zeigt eine schematisierte dreidimensionale Ansicht eines Ausführungsbeispiels einer Sitzreihe gemäß einem Ausführungsbeispiel der vorliegenden Erfindung.

In der folgenden Beschreibung werden für gleiche oder sich entsprechende Elemente die gleichen Bezugsziffern verwendet.

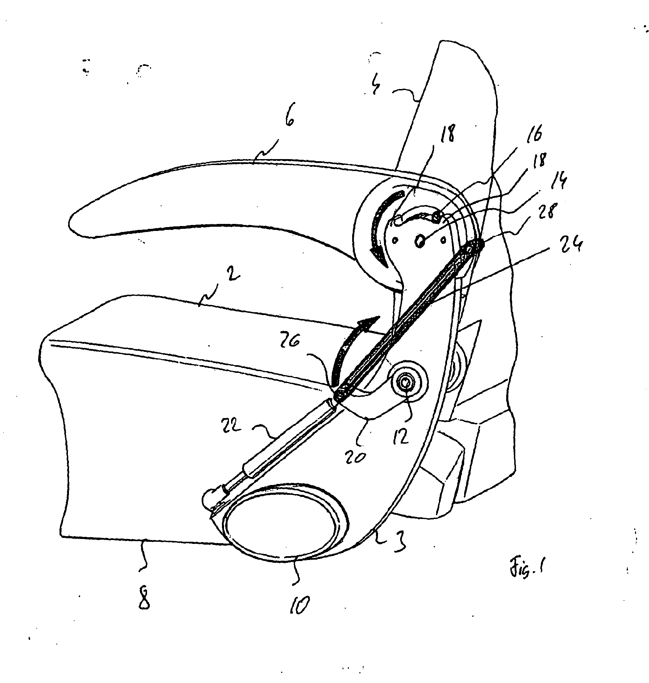

Die Ausführungsbeispiele der Figuren 1, 2 und 4 bis 7 können dem Verständnis der Erfindung dienen.

Fig. 1 zeigt eine schematisierte dreidimensionale Seitenansicht eines Klappsitzes für ein Flugzeug. Der Sitz bzw. Klappsitz umfasst eine Sitzfläche 2 sowie eine Rückenlehne 4. In Fig. 1 ist eine Armlehne 6 dargestellt, die sich in Sitzrichtung auf der linken Seite des Sitzes befindet. In Fig. 1 ist lediglich eine Armlehne 6 dargestellt. Ebenfalls kann in spiegelverkehrter Art und Weise mit im Wesentlichen dem gleichen Aufbau eine weitere Armlehne 6 auf der in Sitzrichtung rechten Seite vorgesehen sein. Vorzugsweise ist eine dem Gang zugewandte Armlehne einer Sitzfläche mit der Sitzfläche gekoppelt und bei einem nach oben Schwenken der Sitzfläche nach unten verschwenkbar. Der Sitz ist auf einer Tragestruktur 10 angeordnet, auf der die Sitzfläche 2 sowie die Rückenlehne 4 angebracht sind. An der Tragestruktur 10 ist ferner ein Halteelement 3 vorgesehen, an dem beispielsweise eine Achse 12 sowie eine Achse 14 vorgesehen ist. Die Achse 12 kann beispielsweise die Schwenkachse für die Sitzfläche 2 und der Rückenlehne 4 sein. Jedoch kann gemäß einem weiteren Ausführungsbeispiel der vorliegenden Erfindung auch eine separate Schwenkachse für die Sitzfläche 2 vorgesehen werden, um eine Bewegung der Sitzfläche nach oben an die Rückenlehne 4 zu ermöglichen. In anderen Worten wird entweder um die Achse 12 oder um die entsprechend andere Achse, die in Fig. 1 nicht dargestellt ist, die Sitzfläche 2 an die Rückenlehne 4 des Sitzes angeklappt. Die Bezugsziffer 8 bezeichnet eine Unterseite der Sitzfläche 2. Beispielsweise kann die Sitzfläche 2 mittels eines strukturverstärkten Sitzpolsters ausgestaltet werden.

Wenn die Sitzfläche 2 in Sitzposition ist, d. h. in einer Position derart, dass eine Person darauf sitzen kann, kann die Armlehne 6 in etwa um 90 Grad entgegen der Pfeilrichtung, wie in Fig. 1 dargestellt ist, um die Achse 14 geschwenkt werden. Eine Freiheit der Schwenkbewegung wird durch Zusammenwirken von zwei Anschlägen 18 und einem Führungsstift 16, der an der Armlehne 6 angebracht ist, vorgesehen. Die Anschläge 18 sind an dem Halteelement 3 vorgesehen.

In anderen Worten kann die Sitzfläche 2 nach oben, wie mittels des Pfeils in Fig. 1 angegeben, an die Rückenlehne 4 angeklappt werden. Ebenfalls kann die Armlehne 6, die vorzugsweise bei Anordnung des Sitzes in einem Flugzeug im Wesentlichen parallel zu einer Flugzeuglängsrichtung ist, wenn die Sitzfläche 2 in Sitzposition ist, nach oben geklappt werden bzw. in der in Fig. 1 dargestellten Position angeordnet sein.

Die Sitzfläche 2 ist starr an einem Punkt 26 mit einem Hebel 20 verbunden, der um die Drehachse 12 drehbar ist. Der Punkt 26 ist mittels einer Koppelstange 24 mit einem Punkt 28 und der Armlehne 6 verbunden. Der Punkt 28 ist an der Armlehne 6 in Sitzrichtung gesehen hinter der Drehachse 14 angeordnet. Die Punkte 26 und 28 können beispielsweise Drehgelenke sein, mittels denen die Koppelstange 24 mit der Armlehne 6 und dem Hebel 20 verbunden ist. Wird nun die Sitzfläche 2, mittels des unteren Pfeils in Fig. 1 dargestellt, nach oben geklappt, wird der Punkt 26 entlang des unteren Pfeils versetzt. Diese Versetzung findet auf einer Kreisbahn um die Achse 12 statt. Diese Kreisbahn wird mittels des Hebels 20 definiert. Durch diese Versetzung wird die Armlehne 6 von der Koppelstange 24 derart um die Drehachse 14 gedreht, dass die Armlehne 6 nach unten geklappt wird. Vorzugsweise wird die Armlehne 6, in der in Fig. 1 gezeigten Darstellung, um etwa 90 Grad aus der in Fig. 1 dargestellten Position gegen den Uhrzeigersinn nach unten weggeschwenkt, so dass sie im Wesentlichen seitlich eine Verlängerung zu der Rückenlehne 4 darstellt.

Dadurch, dass die Sitzfläche 2 an die Rückenlehne 4 angeklappt wird und die Armlehne 6 nach unten weggeklappt wird, verringern sich die Ausmaße des Sitzes in Sitzrichtung gesehen wesentlich, wodurch beispielsweise, wenn der Sitz als Sitz einer Sitzreihe eines Flugzeugs angeordnet ist, nun ein vergrößerter Verkehrsbereich zum Zugang zu weiteren Sitzen der gleichen Sitzreihe zur Verfügung gestellt wird. Auch kann eine Verkehrsfläche eines angrenzenden Ganges vergrößert werden, da beispielsweise eine Person in den durch die Sitzfläche 2 und die Armlehne 6 freigegebenen Raum eintreten kann und beispielsweise Gepäck in Staufächem über oder unter den Sitzen ablegen kann. Auf diese Art und Weise wird ermöglicht, dass, obwohl eine Person gerade Gepäck in ein Staufach legt, weitere Personen den Gang des Flugzeuges nutzen können, um beispielsweise zu ihren Sitzen zu kommen.

Die Bezugsziffer 22 in Fig. 1 bezeichnet ein Dämpfungselement, wie beispielsweise eine Gasdruckfeder. Durch Anordnung dieses Dämpfungselements kann beispielsweise eine Bewegung der Sitzfläche 2 und der Armlehne 6 gedämpft werden, wodurch in vorteilhafter Art und Weise beispielsweise eine Gefahr, dass beispielsweise ein Kind eine Hand zwischen der Armlehne 6 und der Sitzfläche 2 einklemmt, verringert wird.

Das Dämpfungselement 22 ist zwischen dem Punkt 26 und dem Halteelement 3 angeordnet. Beispielsweise kann das Dämpfungselement 22 auch zwischen einem beliebigen Punkt auf dem Hebel 20 und der Tragestruktur 10 angeordnet sein.

Durch die Koppelung der Armlehne 6 mit der Sitzfläche 2 wird beispielsweise erzielt, dass bei einem Anheben der Sitzfläche 2 die Armlehne 6 nach unten geklappt wird bzw. bei einem Nachuntenklappen der Armlehne 6 die Sitzfläche 2 nach oben geklappt wird. Dies ermöglicht ein einhändiges Handhaben des Sitzes, d. h. ein einhändiges Anklappen der Armlehne 6 und der Sitzfläche 2. Die Anordnung der Koppelstange 24 an dem Hebel 20, der mit der Sitzfläche 2 gekoppelt ist (wobei der Hebel 20 als Exzenterscheibe ausgestaltet sein kann), mit einem Punkt der Armlehne 6, der in Sitzrichtung hinter der Drehachse 14 der Armlehne liegt, bewirkt eine Umdrehung des Drehsinns der Sitzfläche 2 und der Armlehne 6 derart, dass, wie in Fig. 1 dargestellt, die Armlehne 6 entgegen des Uhrzeigersinns gedreht wird und die Sitzfläche 2 im Uhrzeigersinn an die Rückenlehne 4 angeklappt wird.

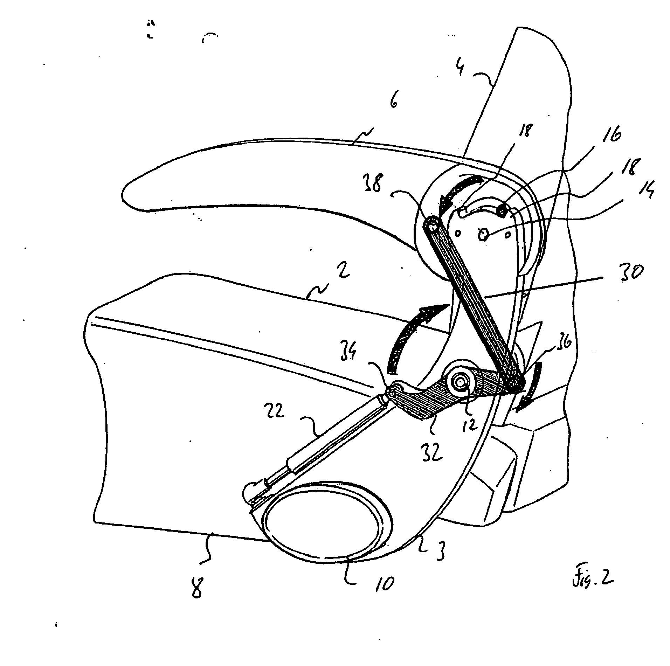

Fig. 2 zeigt eine weitere seitliche dreidimensionale Ansicht eines zweiten Ausführungsbeispiels eines Klappsitzes, der vorzugsweise zur Anordnung in einem Flugzeug ausgestaltet ist. Im Gegensatz zu dem in Fig. 1 dargestellten Ausführungsbeispiel ist ein Schwenkhebel 32 angeordnet, der um die Drehachse 12 drehbar ist. Eine Seite des Schwenkhebels 32 ist an einem Punkt 34 mit dem Dämpfungselement 22 verbunden. Der Punkt 34 kann beispielsweise mittels eines Drehgelenks ausgestaltet werden. Eine andere Seite des Schwenkhebels 32 ist an einem Punkt 36 mit einer Koppelstange 30 verbunden. Der Punkt 36 kann beispielsweise mittels eines Drehgelenks ausgestaltet werden. Die Koppelstange ist an einem Punkt 38 mit der Armlehne 6 verbunden. Der Punkt 38 kann mittels eines Drehgelenks ausgestaltet werden.

Der Punkt 38 liegt in Sitzrichtung des Sitzes gesehen vor einem Drehpunkt der Armlehne 6, d. h. vor der Drehachse 14 der Armlehne 6. Wird nun die Sitzfläche 2, mittels des unteren Pfeils in Fig. 2 dargestellt, an die Rückenlehne 4 angeklappt, führt Punkt 34 eine Drehung um die Drehachse 12 im Uhrzeigersinn aus. Durch die Koppelung der Punkte 38 und 36 wird die Armlehne 6 bei einem Hochklappen der Sitzfläche 2 nach unten geklappt. Dies ist mittels des oberen Pfeils in Fig. 2 dargestellt. Im Gegensatz zu der in Fig. 1 gezeigten Anordnung ist das untere Ende der Koppelstange 30 an dem Punkt 36 hinter der Drehachse 12 der Sitzfläche 2 angeordnet. Der Schwenkhebel 32, dessen vorderes Ende das Dämpfungselement 22 aufnimmt, ist hierfür hinter die Sitzflächen der Drehachse 12 hinaus verlängert. Die Überkreuzwirkung dieser Koppelung ist die Gleiche wie in Fig. 1 beschrieben. Ein Anheben der Sitzfläche 2 bewirkt ein Herabschwenken der Armlehne 6. Auch bewirkt ein Herabschwenken der Armlehne 6 ein Anheben der Sitzfläche 2.

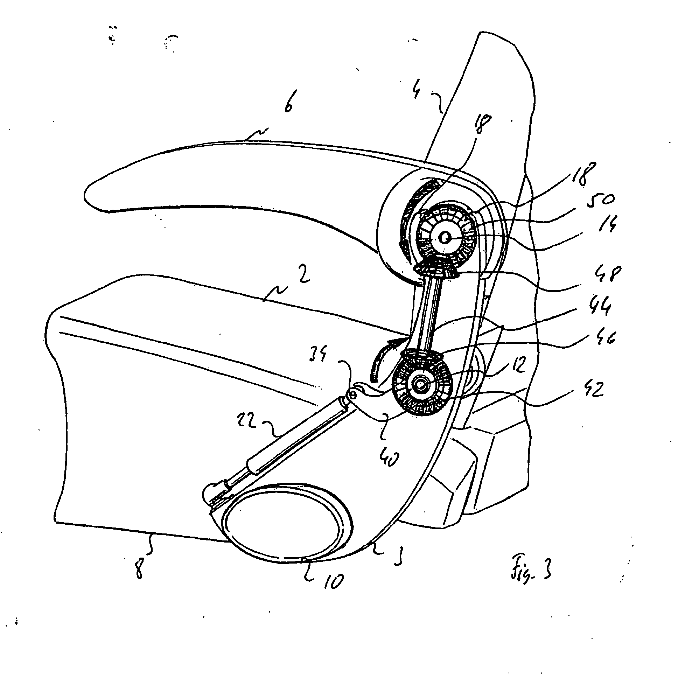

Fig. 3 zeigt eine weitere seitliche dreidimensionale Ansicht eines Ausführungsbeispiels eines Klappsitzes gemäß der vorliegenden Erfindung. Im Gegensatz zu den in den Fig. 1 und 2 dargestellten Ausführungsbeispielen sind Sitzfläche 2 und Armlehne 6, an dem in Fig. 3 dargestellten Ausführungsbeispiel, über einen Satz von Kegelräder 42, 46, 48 und 50 verbunden. Die Kegelräder 46 und 48 sind mittels einer Welle 44 verbunden. Das Kegelrad 42 ist mit der Drehachse 12 der Sitzfläche 2 gekoppelt und das Kegelrad 50 ist mit der Drehachse 14 der Armlehne 6 gekoppelt. Eine Drehbewegung der Sitzfläche 2 um die Drehachse 12 bewirkt damit eine Drehung des Kegelrades 42 im Uhrzeigersinn. Diese Drehung wird auf das Kegelrad 46 übertragen und von dem Kegelrad 46 über die Welle 44 auf das Kegelrad 48 übertragen, das wiederum diese Drehung in eine Drehung entgegen des Uhrzeigersinnes des Kegelrades 50 überträgt. Da die Kegelräder 42 und 50 mit den entsprechenden Drehachsen 12 und 14 gekoppelt sind, bewirkt dementsprechend ein Hochklappen der Sitzfläche 2 ein Herunterklappen der Armlehne 6 und vice versa. Die mittels der Pfeile in Fig. 3 angezeigte Drehrichtungsumkehr ist gegeben, da die Kegelräder 42 und 50 die Drehachsen 12 und 14 der zu verbindenden Sitzteile 2 und 6 nicht übergreifen, sondern nur die einander zugewandten Sektoren des Kegelrades 50 der Armlehne und des Kegelrades 42 der Sitzfläche verbinden. Vorteilhaft kann eine solche Kopplung mittels Kegelräder Drehachsen von Armlehnen und Sitzflächen koppeln, wo ein vergrößerter Abstand zwischen den Drehachsen 12 und 14 erforderlich ist.

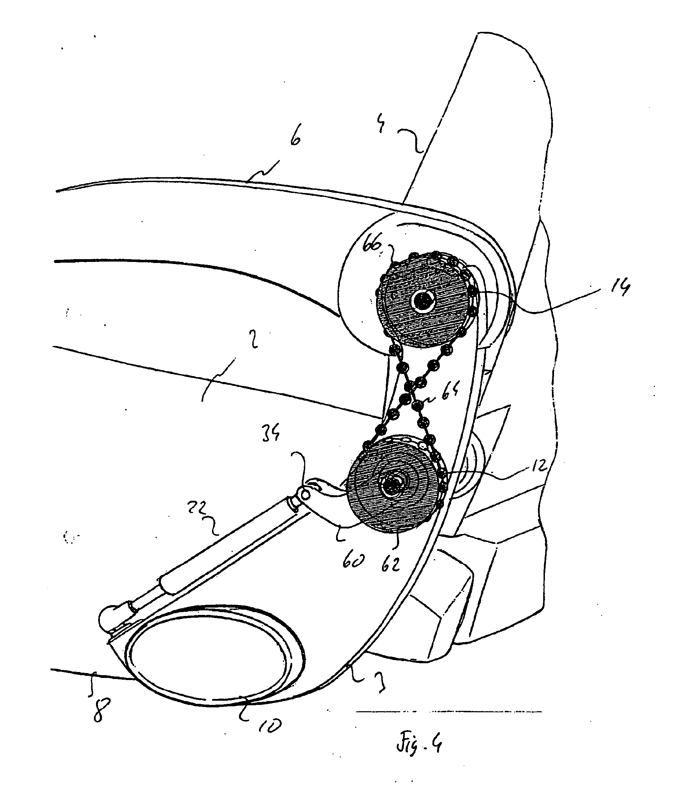

Fig. 4 zeigt eine weitere seitliche schematische dreidimensionale Ansicht eines Ausführungsbeispiels eines Klappsitzes. In dem in Fig. 4 dargestellten Ausführungsbeispiel sind die Sitzfläche 2 und die Armlehne 6 mittels einer überkreuzwirkenden Transmissionskette 24, die mit entsprechenden Kettenrädern 62 und 64 auf den Drehachsen 12 und 14 zusammenwirkt, gekoppelt. Eine Bewegung der Armlehne 6 und der Sitzfläche 2 wird mittels des Dämpfungselements 22, das mittels eines Hebels mit der Drehachse 12 gekoppelt ist, gedämpft. Das Dämpfungselement 22 ist an dem Punkt 34 mit dem Hebel 60 verbunden. Der Punkt 34 kann beispielsweise mittels eines Drehgelenks ausgestaltet werden. Entsprechende Transmissionsketten 24, die eine bewegungsumkehrende Transmissionsführung in Form einer Acht ermöglichen, sind beispielsweise aus Antrieben für Treppenaufzüge zum Behindertentransport bekannt. Solche Transmissionsketten ermöglichen eine Umlenkung um alle drei Raumachsen. Beispielsweise umfasst solch eine Transmissionskette 64 ein auf einer Hohlschiene geführtes Stahlseil, auf welches in regelmäßigen Teilungsabständen Kunststoffkugeln aufgebracht sind. Diese Kunststoffkugeln stellen zusammen mit den entsprechenden Vertiefungen in den Kettenrädern 62 und 66, die auch als Transmissionsräder bezeichnet werden können, den nötigen Form- bzw. Kraftschluss her. In vorteilhafter Art und Weise benötigt die in Fig. 4 dargestellte Kopplung durch Gleiteigenschaften der Kugeln, für welche beispielsweise selbstschmierende Kunststoffe verwendet werden können, nur eine minimale Schmierung und sind damit wenig wartungsintensiv.

In einer Variante dieses Ausführungsbeispiels können beispielsweise, um ein Kollidieren der Kugeln an einem Kreuzungspunkt der Acht zu vermeiden, Führungsschienen vorgesehen werden (in Fig. 4 nicht dargestellt), welche zugleich dazu dienen können, eine Spannung der Transmissionskette 64 zu gewährleisten.

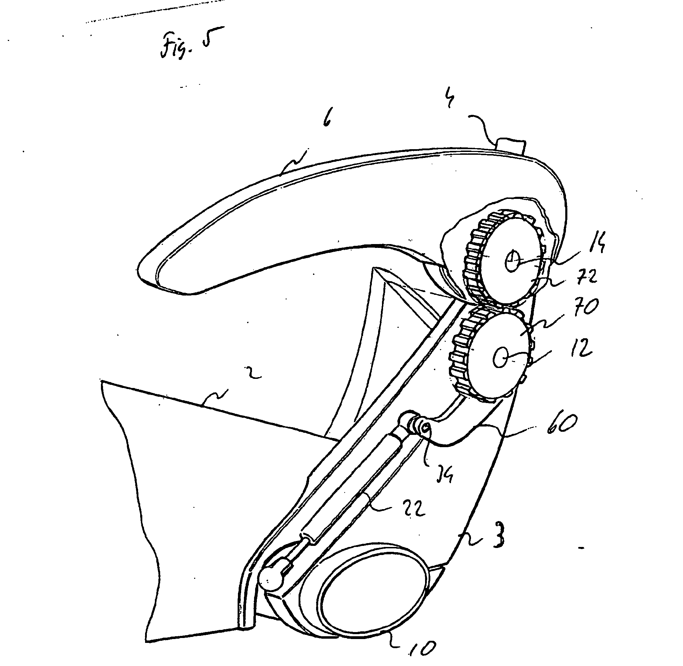

Fig. 5 zeigt eine weitere seitliche schematische dreidimensionale Ansicht eines Klappsitzes. In dem in Fig. 5 gezeigten Ausführungsbeispiel sind die Drehachsen 12 und 14 der Armlehne 6 und der Sitzfläche 2 mittels gleich großen Ritzeln 70 und 72 versehen, die sich gegeneinander abwälzen. Gemäß einer Variante des vorliegenden Ausführungsbeispiels können unterschiedlich große Ritzel 70 und 72 verwendet werden, um beispielsweise unterschiedliche Drehwinkel der Sitzfläche 2 und der Armlehne 6 zu realisieren.

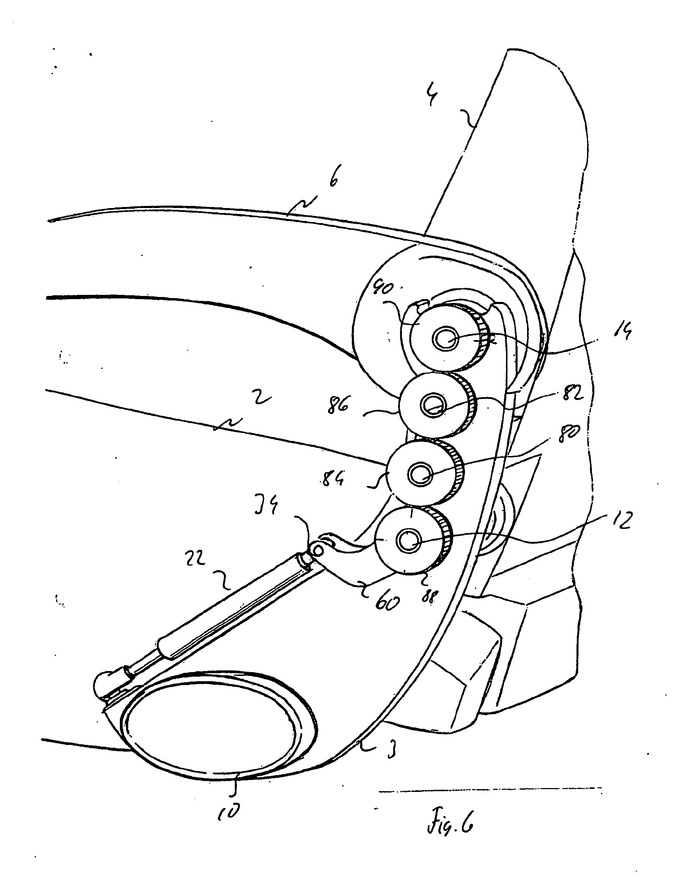

Fig. 6 zeigt eine weitere seitliche schematische dreidimensionale Ansicht eines Ausführungsbeispiels eines Klappsitzes. Im Gegensatz zu der in Fig. 5 gezeigten Anordnung sind hier zwischen dem Ritzel 90 auf der Achse 14 und dem Ritzel 88 auf der Achse 12 weitere Ritzel 84 und 86 auf Hilfsachsen 80 und 82 vorgesehen. Die Ritzel 84, 86, 88 und 90 wälzen jeweils aufeinander ab, wodurch eine Drehbewegung der Achse 12 in eine entgegengesetzte Drehbewegung der Achse 14 umgedreht wird. Durch das Zwischenschalten der Ritzel 84 und 86 kann ein größerer Abstand zwischen den Drehachsen 12 und 14 realisiert werden, als er beispielsweise in dem in Fig. 5 gezeigten Ausführungsbeispiel möglich ist.

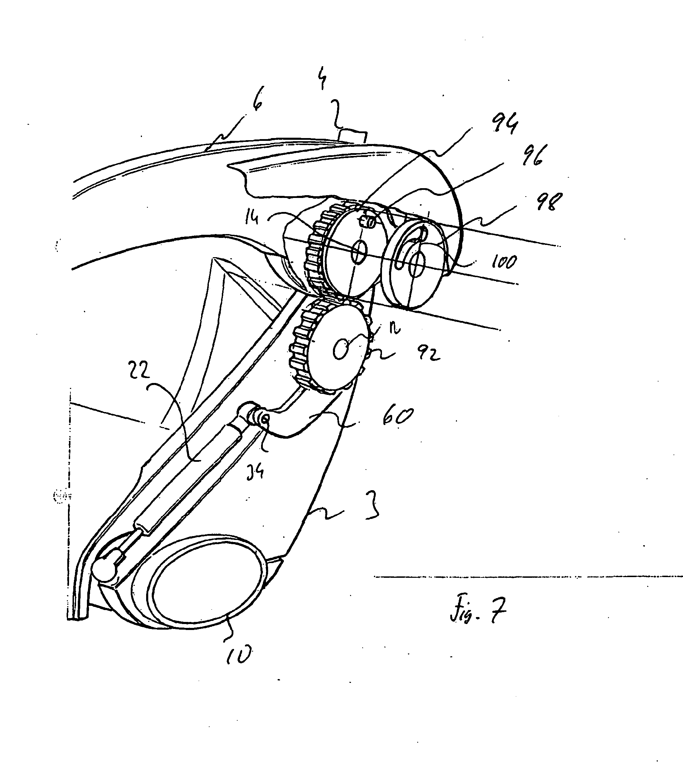

Fig. 7 zeigt eine weitere seitliche schematische dreidimensionale Ansicht eines Ausführungsbeispiels eines Sitzes. Die in Fig. 7 dargestellte Anordnung umfasst, ähnlich wie die in Fig. 5 dargestellte Anordnung, zwei Ritzel 92 und 94 auf den Achsen 12 und 14. Allerdings ist zur Kopplung des Ritzels 94 mit der Armlehne 6 eine Kulisse 98 vorgesehen, die ein Langloch 100 aufweist, in die ein Stift 96 auf dem Ritzel 94 eingreift. Das Ritzel 94 ist freidrehend auf der Drehachse 14 und nicht mit der Drehachse 14 gekoppelt. Das Ritzel 92 ist mit der Drehachse 12 gekoppelt. Die

Kulisse 98 ist fest auf der Drehachse 14 angeordnet und auf diese Art und Weise mit der Armlehne 6 gekoppelt. Vorteilhaft ermöglicht das Vorsehen der Kulisse 98, dass die Armlehne 6 bei heruntergeklappter Sitzfläche 2 um 90 Grad nach oben geschwenkt werden kann.

Wird bei nach oben geklappter Armlehne 6 die Sitzfläche 2 nach oben verschwenkt, wird beim Hochklappen der Stift 2, und damit die Armlehne 6, durch ein Ende des Langlochs der Kulisse der waagrechten Position zugeführt von wo die Armlehne 6 mangels Bremse in die vertikale Pendelposition fällt.

Wird bei waagrechter Armlehne 6 die Sitzfläche 2 nach oben geklappt, wälzt das Ritzel 92, das mit der Drehachse 12 verbunden ist, auf dem Ritzel 94 ab und der Stift 96 nimmt, sobald er ein Ende des Langloches 100 erreicht, die Kulisse 98 mit der Armlehne 6 in der Bewegung mit, wodurch beim Hochklappen der Sitzfläche 2 die Armlehne 6 nach unten weggeklappt wird. Dies ermöglicht in vorteilhafter Art und Weise auch einen totpunktfreien Bewegungsablauf. Überdies ermöglicht die in Fig. 7 gezeigte Anordnung, dass ein Fluggast die Sitzfläche zum Platznehmen herunterklappt, dass sich die Armlehne aus der lotrechten nach unten weisenden Ruhestellung in die waagrechte Nutzstellung klappt. Wird die Armlehne nicht benötigt, so kann sie nach oben weggeklappt werden. Diesbezüglich kann beispielsweise eine Reibungsbremse zwischen der Kulisse 98 und dem Ritzel 94 vorgesehen werden.

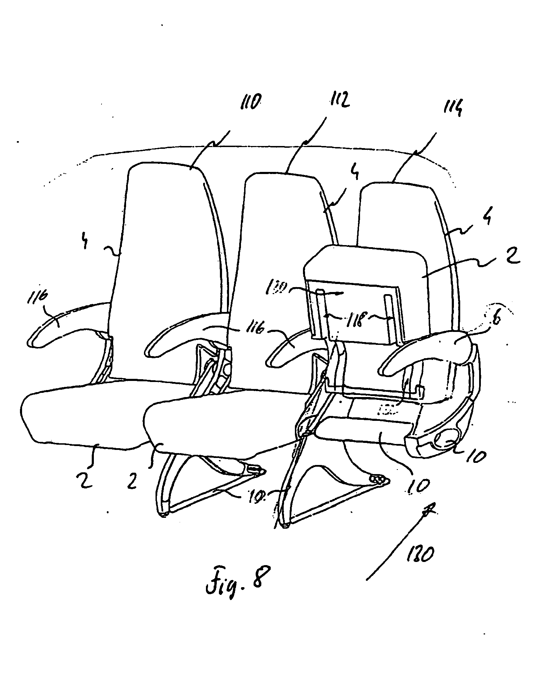

Fig. 8 zeigt eine vereinfachte dreidimensionale Ansicht einer Sitzreihe gemäß eines Ausführungsbeispiels der vorliegenden Erfindung. Wie Fig. 8 zu entnehmen ist, weist die Sitzreihe drei Einzelsitze 110, 112 und 114 auf, wobei die Sitzreihe starre Armlehnen 116 aufweist. Lediglich die Armlehne 6, die dem Gang 130 des Flugzeuges nahe ist, ist gemäß der vorliegenden Erfindung mit der Sitzfläche 2 derart gekoppelt, dass bei einem Hochklappen der Sitzfläche 2 die Armlehne 6 nach unten wegklappbar ist. In der in Fig. 8 dargestellten Ausführungsform sind die Sitzfläche 2 und die Armlehne 6 nicht starr gekoppelt. D. h. ein Hochklappen der Sitzfläche 2, wie in Fig. 8 gezeigt, bewirkt nicht automatisch ein nach Untenwegschwenken der Armlehne 6 in die lotrechte nach unten weisende Ruheposition. Allerdings wird durch ein Nachobenklappen der Sitzfläche 2 eine Verriegelung der Armlehne 6 gelöst, so dass die Armlehne 6 in der in Fig. 8 gezeigten Position einfach durch Betätigung einer Bedienperson nach unten weggeklappt werden kann.

Auf einer Unterseite der Sitzfläche 2 sind Aussparungen 18 vorgesehen, die beispielsweise an die Kontur der Tragestruktur 10 angepasst sind. Eine Unterseite der Sitzfläche 2 kann beispielsweise als Sitzkasten 120 bezeichnet werden.

Gemäß einem weiteren Ausführungsbeispiel der vorliegenden Erfindung kann beispielsweise die Sitzfläche 2 mittels einer Feder vorgespannt werden, so dass, wenn eine Person von der Sitzfläche 2 aufsteht, die Sitzfläche 2 automatisch an die Sitzlehne 4 angeklappt wird. Gemäß der vorliegenden Erfindung wird dann automatisch die Armlehne 6 nach unten in die lotrechte Ruheposition weggeklappt.

Die Armlehnen können jeweils eine Mechanik wie in den Figs. 1 bis 7 gezeigt, aufweisen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Klappsitz, umfassend:
ein Rückenlehne (4);
eine Sitzfläche (2); und
eine Armlehne (6);
wobei die Sitzfläche schwenkbar ist;
wobei die Armlehne (6) bei einem Schwenken der Sitzfläche (2) nach unten verschwenkbar ist;
wobei die Sitzfläche (2) nach oben an die Rückenlehne (4) anschwenkbar ist; und
wobei ein Anschwenken der Sitzfläche (2) an die Rückenlehne (4) ein Verschwenken der Armlehne (6) nach unten bewirkt;
wobei die Sitzfläche (2) und die Armlehne (6) kraftschlüssig gekoppelt sind;
**dadurch gekennzeichnet, dass**
der Klappsitz für ein Flugzeug ausgeführt ist;
wobei weiterhin ein Dämpfungselement vorgesehen ist, das zum Dämpfen einer Bewegung der Sitzfläche und der Armlehne ausgeführt ist;
wobei die Sitzfläche (2) und die Armlehne (6) mittels zumindest einem Koppelelement gekoppelt sind, wobei das zumindest eine Koppelelement ein Kegelrad (42, 46, 48, 50) ist.

2. Klappsitz nach Anspruch 1,
wobei der Klappsitz zur Anordnung an einem Gang (130) in einem Flugzeug ausgestaltet ist; und
wobei die Armlehne an einer Seite des Klappsitzes angeordnet ist, die dem Gang zugewandt ist.

3. Klappsitz nach einem der Ansprüche 1 bis 2,
wobei der Klappsitz als Teil einer Sitzgruppe für eine Passagierkabine eines Flugzeugs ausgestaltet ist.

4. Klappsitz nach einem der Ansprüche 1 bis 3,
wobei die Armlehne (6) derart angeordnet ist, dass bei Anordnung des Klappsitzes in einer Passagierkabine eines Flugzeugs die Armlehne im Wesentlichen parallel zu einer Längsrichtung des Flugzeugs ausgerichtet ist.

5. Sitzgruppe für ein Fahrzeug, umfassend:
einen ersten Sitz (114) und einen zweiten Sitz (110, 112);
wobei der erste Sitz ein Rückenlehne (4), eine Sitzfläche (2), eine Armlehne (6) aufweist;
wobei die Sitzfläche (2) schwenkbar ist, und
wobei die Armlehne (6) bei einem Schwenken der Sitzfläche (2) nach unten verschwenkbar ist;
wobei die Sitzfläche (2) nach oben an die Rückenlehne (4) anschwenkbar ist;
wobei ein Anschwenken der Sitzfläche (2) an die Rückenlehne (4) ein Verschwenken der Armlehne (6) nach unten bewirkt;
wobei die Sitzfläche (2) und die Armlehne (6) kraftschlüssig gekoppelt sind;
**dadurch gekennzeichnet,**
**dass** weiterhin ein Dämpfungselement vorgesehen ist, das zum Dämpfen einer Bewegung der Sitzfläche und der Armlehne ausgeführt ist;
**dass** die Sitzfläche (2) und die Armlehne (6) mittels zumindest einem Koppelelement gekoppelt sind, wobei das zumindest eine Koppelelement ein Kegelrad (42, 46, 48, 50) ist.

6. Sitzgruppe nach Anspruch 5,
wobei die Sitzgruppe zur Anordnung an einem Gang (130) in einem Flugzeug ausgestaltet ist;
wobei der erste Sitz zur an den Gang angrenzenden Anordnung ausgestaltet ist; und wobei die Armlehne an einer Seite des ersten Sitzes angeordnet ist, die dem Gang zugewandt ist.

7. Flugzeug mit einem Klappsitz nach einem der Ansprüche 1 bis 4 oder einer Sitzgruppe nach einem der Ansprüche 5 bis 6.

## Claims

1. A folding seat, comprising:
a back rest (4);
a seat area (2); and
an arm rest (6);
wherein the seat area is pivotable;
wherein the arm rest (6) is downwardly pivotable, when the seat area (2) is pivoted;
wherein the seat area (2) is upwardly pivotable against the back rest (4); and
wherein a pivoting of the seat area (2) against the back rest (4) causes a downward pivoting of the arm rest (6);
wherein the seat area (2) and the arm rest (6) are coupled in a force-fit manner;
**characterized in that**
the folding seat is designed for an aircraft;
wherein furthermore a damping element is provided, which is designed for damping a movement of the seat area and the arm rest;
wherein the seat area (2) and the arm rest (6) are coupled by at least one coupling element, wherein the at least one coupling element is a bevel gear (42, 46, 48, 50).

2. The folding seat according to claim 1,
wherein the folding seat is formed for being disposed at a corridor (130) in an aircraft; and
wherein the arm rest is arranged at a side of the folding seat which faces the corridor.

3. The folding seat according to one of claims 1 to 2,
wherein the folding seat is formed as part of a seat group for a passenger cabin of an aircraft.

4. The folding seat according to one of claims 1 to 3,
wherein the arm rest (6) is disposed in such a way, that the arm rest is aligned substantially in parallel to a longitudinal direction of the aircraft, when the folding seat is disposed in a passenger cabin of an aircraft.

5. A seat group for a vehicle, comprising:
a first seat (114), and a second seat (110, 112);
wherein the first seat has a back rest (4), a seat area (2), an arm rest (6);
wherein the seat area (2) is pivotable, **characterized in that,** and
wherein the arm rest (6) is downwardly pivotable when pivoting the seat area (2);
wherein the seat area (2) is upwardly pivotable against the back rest (4);
wherein a pivoting of the seat area (2) against the back rest (4) causes a downward pivoting of the arm rest (6);
wherein the seat area (2) and the arm rest (6) are coupled in a force-fit manner;
**characterized in,**
**that** furthermore there is provided a damping element, which is designed for damping a movement of the seat area and the arm rest;
**that** the seat area (2) and the arm rest (6) are coupled by means of at least one coupling element, wherein the at least one coupling element is a bevel gear (42, 46, 48, 50).

6. The seat group according to claim 5,
wherein the seat group is formed to be disposed at a corridor (130) in an aircraft;
wherein the first seat is formed for being arranged adjacent to the corridor; and
wherein the arm rest is arranged at one side of the first seat facing the corridor.

7. An aircraft having a folding seat according to one of claims 1 to 4 or a seat group according to one of claims 5 to 6.

## Revendications

1. Siège rabattable comprenant :
un dossier (4)
une assise (2) ; et
un accoudoir (6)
dans lequel
- l'assise est pivotante ;
- l'accoudoir (6) peut pivoter vers le bas lors d'un pivotement de l'assise (2) ;
- l'assise (2) peut basculer vers le haut sur le dossier (4); et
un basculement de l'assise (2) sur le dossier (4) provoque un pivotement de l'accoudoir (6) vers le bas ;
- l'assise (2) et l'accoudoir (6) sont accouplés par force d'adhérence,
**caractérisé en ce que**
- le siège rabattable est réalisé pour un avion ;
- un élément d'amortissement étant en outre prévu, lequel est réalisé pour amortir un déplacement de l'assise et de l'accoudoir ;
- l'assise (2) et l'accoudoir (6) étant accouplés au moyen d'au moins un élément d'accouplement, le au moins un élément d'accouplement étant un pignon conique (42, 46, 48, 50).

2. Siège rabattable suivant la revendication 1, dans lequel
- le siège rabattable est configuré pour l'agencement sur un couloir (130) dans un avion ; et
- l'accoudoir est disposé sur un côté du siège rabattable, tourné vers le couloir.

3. Siège rabattable suivant l'une des revendications 1 et 2, dans lequel le siège rabattable est configuré sous forme d'une partie d'un groupe de sièges pour une cabine de passagers d'un avion.

4. Siège rabattable suivant l'une des revendications 1 à 3, dans lequel l'accoudoir (1) est disposé de telle sorte que, lors de l'agencement du siège rabattable dans une cabine de passagers d'un avion, l'accoudoir est orienté de façon essentiellement parallèle à une direction longitudinale de l'avion.

5. Groupe de sièges pour un véhicule, comprenant un premier siège (114) et un deuxième siège (110, 112) et dans lequel
- le premier siège présente un dossier (4), une assise (2), un accoudoir (6)
- l'assise (2) est pivotante, et
- l'accoudoir (6) peut pivoter vers le bas lors d'un pivotement de l'assise (2)
- l'assise (2) peut basculer vers le haut sur le dossier (4)
- un basculement de l'assise (2) sur le dossier (4) provoque un pivotement de l'accoudoir (6) vers le bas
- l'assise (2) et l'accoudoir (6) sont accouplés par force d'adhérence ;
**caractérisé en ce que,**
- il est en outre prévu un élément d'amortissement, qui est réalisé pour amortir un déplacement de l'assise et de l'accoudoir ;
- l'assise (2) et l'accoudoir (6) sont accouplés au moyen d'au moins un élément d'accouplement, le au moins un élément d'accouplement étant un pignon conique (42, 46, 48, 50).

6. Groupe de sièges suivant la revendication 5, dans lequel
- le groupe de sièges est configuré pour l'agencement sur un couloir (130) dans un avion ;
- le premier siège est configuré pour l'agencement limitrophe au couloir ; et
- l'accoudoir est disposé sur un côté du premier siège, tourné vers le couloir.

7. Avion avec un siège rabattable suivant l'une des revendications 1 à 4 ou avec un groupe de sièges suivant l'une des revendications 5 à 6.
